Europäisches Patentamt

European Patent Office

Office européen des brevets

(11) Numéro de publication: **0 171 305 B1**

# FASCICULE DE BREVET EUROPEEN

(45) Date de publication de fascicule du brevet:
**13.11.91**

(51) Int. Cl.⁵: **G06F 15/332**

(21) Numéro de dépôt: **85401301.8**

(22) Date de dépôt: **27.06.85**

Le dossier contient des informations techniques présentées postérieurement au dépôt de la demande et ne figurant pas dans le présent fascicule.

(54) **Circuit de calcul de la transformée de Fourier discrète.**

(30) Priorité: **20.07.84 FR 8411541**

(43) Date de publication de la demande:
**12.02.86 Bulletin 86/07**

(45) Mention de la délivrance du brevet:
**13.11.91 Bulletin 91/46**

(84) Etats contractants désignés:
**DE FR GB IT NL**

(56) Documents cités:
**EP-A- 0 083 967**
**US-A- 3 875 391**

**PATENTS ABSTRACTS OF JAPAN, vol. 8, no. 55 (P-260) [1492], 13 mars 1984; & JP - A - 58 205 281 (TOUYOU TSUUSHINKI K.K.) 30.11.1983**

**PATENTS ABSTRACTS OF JAPAN, vol. 8, no. 196 (P-299) [1633], 8 septembre 1984; & JP - A - 59 81 762 (ASAHI KASEI KOGYO K.K.) 11.05.1984**

(73) Titulaire: **THOMSON-CSF**
**51, Esplanade du Général de Gaulle**
**F-92800 Puteaux(FR)**

(72) Inventeur: **Bergeon, Gérard**
**Thomson-CSF SCPI 173, bld Haussmann**
**F-75379 Paris Cedex 08(FR)**
Inventeur: **Legendre, Claude**
**Thomson-CSF SCPI 173, bld Haussmann**
**F-75379 Paris Cedex 08(FR)**
Inventeur: **Muller, Marc**
**Thomson-CSF SCPI 173, bld Haussmann**
**F-75379 Paris Cedex 08(FR)**
Inventeur: **Cros, Philippe**
**Thomson-CSF SCPI 19, av de Messine**
**F-75008 Paris(FR)**
Inventeur: **Lemaire, Jean-Louis**
**Thomson-CSF SCPI 19, av de Messine**
**F-75008 Paris(FR)**

(74) Mandataire: **Benoit, Monique et al**
**THOMSON-CSF SCPI**
**F-92045 PARIS LA DEFENSE CEDEX 67(FR)**

## Description

L'invention a principalement pour objet un circuit électronique notamment un circuit susceptible d'effectuer le calcul de transformée de Fourier discrète.

La transformée de Fourier est un outil mathématique extrêmement puissant utilisé notamment pour calculer des spectres.

La transformée de Fourier permet notamment de calculer le produit de convolution. En effet la transformée de Fourier du produit de convolution de deux fonctions est égale au produit de transformée de Fourier de ces deux fonctions. Ainsi, en chaque point le produit de convolution de deux fonctions est égal à la transformée de Fourier inverse du produit des transformées de Fourier de ces deux fonctions.

Il est souvent avantageux de pondérer une fonction dont on désire calculer la transformée de Fourier. Le dispositif objet de la présente invention permet d'effectuer, sur commande, la pondération, par exemple avant le calcul de la transformée de Fourier. Pour une suite discrète, la pondération est effectuée en multipliant les termes de la suite par des coefficients de pondération par exemple stockés dans une mémoire morte (ROM en terminologie anglo-saxonne). Avantageusement, la mémoire morte contient plusieurs jeux de coefficients de façon à pouvoir choisir la pondération désirée.

Le circuit objet de la présente invention effectue pour une suite de nombres le calcul numérique, appelée transformée de Fourier discrète, nommée TFD dans la suite de ce brevet. Pour chaque temps, les valeurs de la TFD sont sensiblement égales à la valeur de la transformée de Fourier.

Soit f une suite de nombres $f_n$, n.étant le rang du nombre $f_n$ dans la suite f.

La suite f est par exemple la suite de N valeurs numériques d'une fonction qu'on a échantillonnée.

$F_k$, TFD de $f_n$ est définie par :

$$F_k = \sum_{n=0}^{N-1} f_n \, W^{nk} \qquad \text{avec } W = e^{-j(2\pi/N)}$$

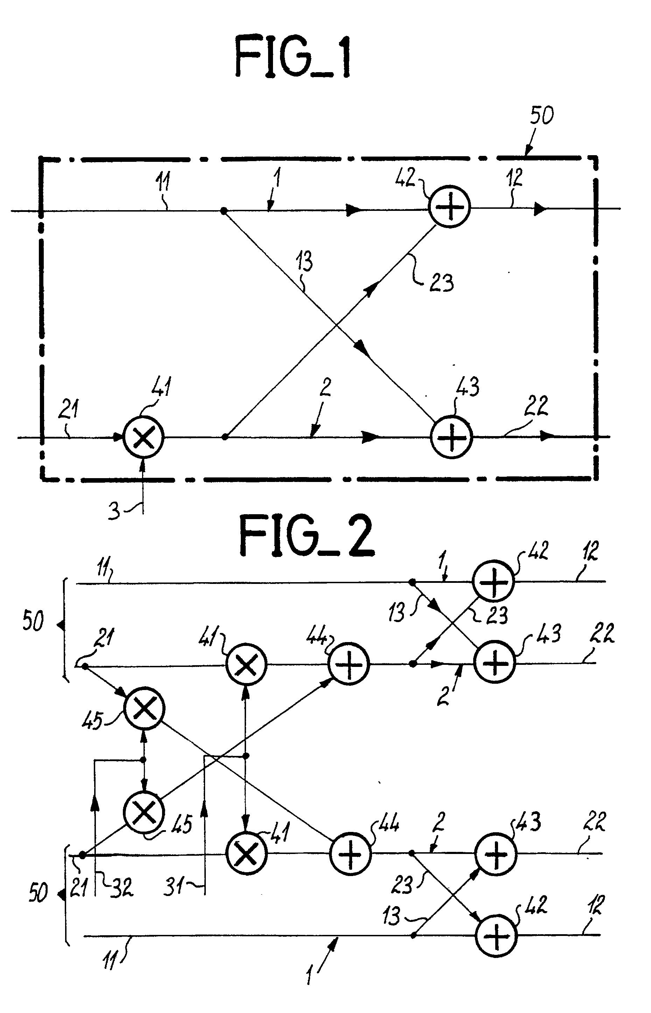

Le dispositif selon l'invention se propose de décomposer un calcul complexe en des successions de calculs simples. Pour cela le dispositif selon l'invention utilise une structure en papillon illustrée sur la figure 1.

L'algorithme de calcul de TFD est celui de la décimation en temps :

Si N est paire, la suite f peut être décomposée en une suite g des termes de f de coefficient pair et en une suite h des termes de la suite f de coefficient impair. Pour $0 \leq L \leq \frac{N}{2} - 1$

$$g_L = f_{2L}$$
$$h_L = f_{2L+1}$$

Soit $G_k$ et $H_k$ les TFD respectivement de $g_L$ et de $h_L$

$$G_k = \sum_{L=0}^{L=\frac{N}{2}-1} g_L \, (W^2)^{Lk}$$

$$H_k = \sum_{L=0}^{L=\frac{N}{2}-1} h_L \, (W^2)^{Lk}$$

Alors

$$F_k = \begin{cases} G_k + W^k H_k & \text{pour } 0 \leqslant k \leqslant \dfrac{N}{2} - 1 \\ \\ G_{k-N/2} + W^k H_{k-N/2} & \text{pour } \dfrac{N}{2} \leqslant k \leqslant N - 1 \end{cases} \qquad (1)$$

Notamment pour deux indices dont la différence est égale à $\frac{N}{2}$ on a :

$W^{m + N/2} = - W^m$

$F_m = G_m + W^m H_m$

et

$$F_{m + \frac{N}{2}} = G_m + W^{m + \frac{N}{2}} H_m = G_m - W^m H_m$$

La demande de brevet européen publiée sous le n° 0 083 967 décrit un circuit intégré de calcul de la TFD par décimation en temps. Ce circuit permet le calcul de la TFD sur 32 points. Il utilise un multiplieur accumulateur limitant la dynamique du calcul. Le temps de calcul par le circuit décrit dans ladite demande est augmenté de près de 36% par le temps nécessaire aux échanges de données. Ainsi les échanges de données utilisent plus de 25% du temps total de calcul. D'autre part, la demande de brevet européen publiée sous le n° 0 083 967 décrit une association de circuits intégrés capable de calculer les TFD pour un nombre de points multiple de 32. Une telle association exige la supervision des transferts de données par une logique externe ainsi qu'un recalcul des coefficients de la TFD.

Le dispositif objet de la présente invention permet d'éviter les inconvénients de l'art antérieur. Le dispositif objet de la présente invention permet de calculer de façon autonome une TFD sur un nombre de points quelconque. Pour conserver la dynamique, si nécessaire, un multiplieur et des additionneurs séparés et en virgule flottante sont utilisés. Une mémoire scindée en deux permet d'allouer une partie aux calculs, simultanément l'autre partie de la mémoire se chargeant des échanges de données.

De manière plus précise, l'invention a pour objet un circuit de calcul de la transformée de Fourier discrète tel que défini dans les revendications.

L'invention sera mieux comprise au moyen de la description ci-après et des figures annexées données comme des exemples non limitatifs parmi lesquels :
- la figure 1 illustre un cycle de calcul appelé papillon TFD pour nombres réels ;
- la figure 2 illustre un papillon TFD pour nombres complexes ;
- les figures 3 à 5 illustrent les chemins de données ;
- la figure 6 illustre un exemple de réalisation de circuit selon l'invention ;
- les figures 7 et 8 illustrent les évolutions dans le temps des fonctions des composants du circuit selon l'invention ;
- la figure 9 illustre un spectre radar ;
- les figures 10 et 11 illustrent les dispositifs de gestion de mémoire pour circuit selon l'invention.

Sur les figures 1 à 11 les mêmes références désignent les mêmes éléments.

Sur les figures 1 à 11 le sens des flots de donnée est indiqué par des flèches.

Sur la figure 1, on peut voir un schéma synoptique d'un papillon TFD 50 utilisant l'algorithme de la décimation en temps. Le papillon 50 comporte une première ligne 1, avec une entrée 11 et une sortie 12 et une seconde ligne 2, avec une entrée 21 et une sortie 22. La ligne 1 comprend un additionneur 42. La ligne 2 comprend un multiplieur 41 suivi d'un additionneur 43. Les entrées du multiplieur 41 sont connectées à l'entrée 21 de la ligne 2 et à une ligne 3. Les entrées de l'additionneur 42 sont connectées à la ligne 1 d'une part et à la ligne 2 au niveau de la sortie du multiplieur 41 par une ligne 23 d'autre part. Les entrées de l'additionneur 43 sont connectées à la ligne 2 au niveau de la sortie du multiplieur 41 d'une part et à la ligne 1 en amont de l'additionneur 42 par une ligne 13 d'autre part.

Le papillon 50 illustré par la figure 1 est particulièrement bien adapté pour le calcul en décimation en temps de termes de la TFD de suites de nombres réels. La décimation en temps suppose qu'aux entrées 11 et 21 du papillon 50 se présentent les termes des suites g et h. Par contre aux sorties 12 et 22 du papillon 50 on trouve les termes ordonnés de la suite F. Le tableau suivant donne la correspondance des indices d'entrée et de sortie pour une TFD de huit termes. Celle des indices est liée par la relation dite "bit reverse" car les chiffres de poids fort et les chiffres de poids faible sont permutés dans l'écriture binaire de ces indices.

## TABLEAU I

| Indice d'entrée | | Indice de sortie | |
|---|---|---|---|
| Décimal | Binaire | Décimal | Binaire |
| 0 | 000 | 000 | 0 |
| 4 | 100 | 001 | 1 |
| 2 | 010 | 010 | 2 |
| 6 | 110 | 011 | 3 |
| 1 | 001 | 100 | 4 |
| 5 | 101 | 101 | 5 |
| 3 | 011 | 110 | 6 |
| 7 | 111 | 111 | 7 |

Sur la figure 2, on peut voir un ensemble de deux papillons 50 susceptibles d'effectuer le calcul de TFD sur des suites de nombres complexes. Chacun des papillons 50 comporte un additionneur 44 dont une des entrées est connectée à la sortie des multiplieurs 41. L'autre entrée desdits additionneurs 44 est connectée via des multiplieurs 45 aux entrées 21 des papillons complémentaires. D'autre part, les entrées des multiplieurs 45 sont connectées à une ligne 32. Les entrées des multiplieurs 41 sont connectées à une ligne 31. Les lignes 31 et 32 correspondent à la ligne 3 de la figure 1.

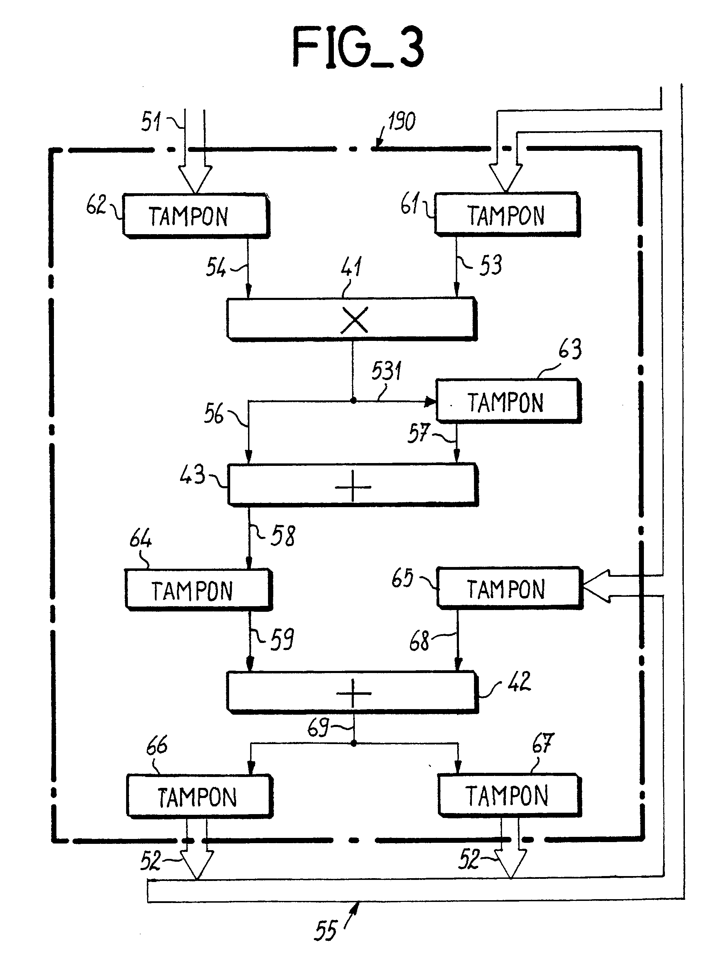

Sur la figure 3, on peut voir le chemin de donnée pour le calcul de la TFD dans un exemple de processeur selon l'invention. Le dispositif 190 des figures 3, 4 et 5 comporte le multiplieur 41, les additionneurs 42 et 43 ainsi que des mémoires tampon 61 à 67. Les mémoires tampon 61 à 67 assurent le retard d'un cycle d'horloge nécessaire au synchronisme de la structure pipe-line du processeur selon l'invention ainsi qu'une resynchronisation par rapport aux impulsions d'horloge. Un bus de donnée 55 relie le dispositif 190 des figures 3, 4 et 5 à une mémoire non représentée. L'entrée de la mémoire tampon 61 est reliée au bus 55. L'entrée de la mémoire tampon 62 est reliée par un bus 51 à une mémoire de coefficient de la TFD non représentée. Les sorties des mémoires tampon 61 et 62 sont reliées aux entrées du multiplieur 41 respectivement par les lignes 53 et 54. La sortie du multiplieur 41 est reliée d'une part par une ligne 531 à la mémoire tampon 63 et d'autre part par une ligne 56 à une entrée de l'additionneur 43. La sortie de la mémoire tampon 63 est reliée à l'autre entrée de l'additionneur 43 par une ligne 57. La sortie de l'additionneur 43 est reliée à l'entrée de la mémoire tampon 64 par une ligne 58. La sortie de la mémoire tampon 64 est reliée à une entrée de l'additionneur 42 par une ligne 59. L'entrée de la mémoire tampon 65 est reliée au bus 55. La sortie de la mémoire tampon 65 est reliée à l'autre entrée de l'additionneur 42 par une ligne 68. La sortie de l'additionneur 42 est reliée aux entrées des mémoires tampon 66 et 67 par une ligne 69. Les sorties 52 des mémoires tampon 66 et 67 sont reliées au bus 55.

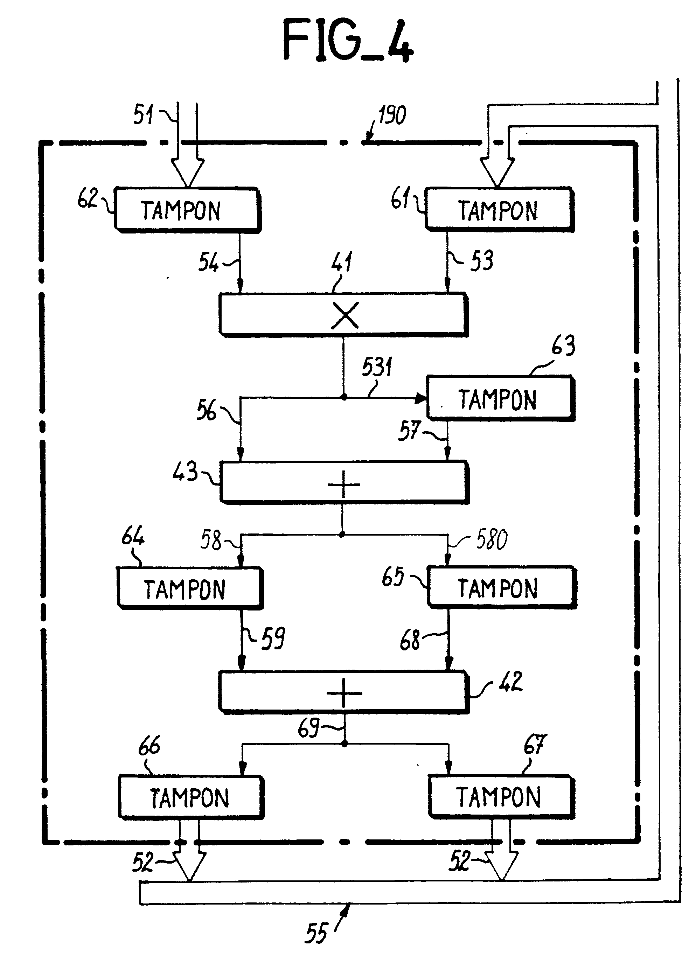

Sur la figure 4, on peut voir le chemin de donnée pour le calcul de la pondération dans un exemple de processeur selon l'invention. L'entrée de la mémoire tampon 61 est reliée au bus 55. L'entrée de la mémoire tampon 62 est reliée par un bus 51 à une mémoire des coefficients de la TDF non représentée. Les sorties des mémoires tampon 61 et 62 sont reliées aux entrées du multiplieur 41 respectivement à la ligne 53 et 54. La sortie du multiplieur 41 est reliée d'une part à la ligne 531 à une mémoire tampon 63 et d'autre part à la ligne 56 à une entrée de l'additionneur 43. La sortie de la mémoire tampon 63 est reliée à l'autre entrée de l'additionneur 43 par la ligne 57. La sortie de l'additionneur 43 est reliée d'une part à l'entrée de la mémoire tampon 65 par la ligne 580 et d'autre part à l'entrée de la mémoire tampon 64 par une ligne 58. La sortie de la mémoire tampon 65 est reliée à une entrée de l'additionneur 42 par une ligne 68. La sortie de la mémoire tampon 64 est reliée à l'autre entrée de l'additionneur 42 par une ligne 59. La sortie de l'additionneur 42 est reliée aux entrées des mémoires tampon 66 et 67 par la ligne 69. Les sorties 52 des mémoires tampon 66 et 67 sont reliées au bus 55.

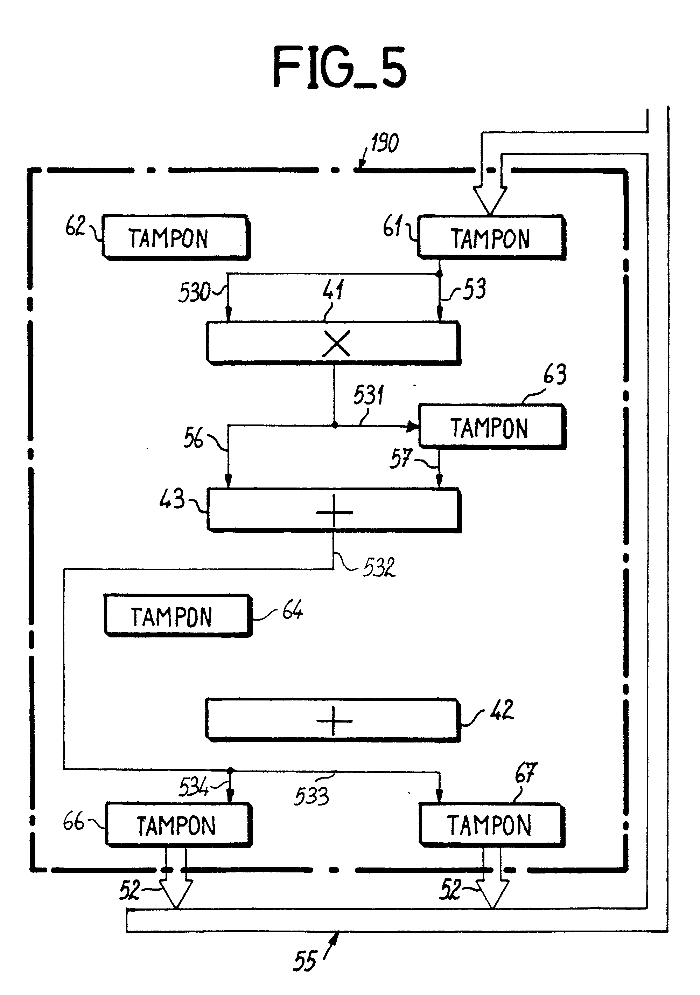

Sur la figure 5, on peut voir le chemin de donnée pour le calcul du module d'un exemple de processeur 190 selon l'invention. Les mémoires tampon 62 et 64 ainsi que l'additionneur 42 du dispositif 190 ne sont pas connectés pour le calcul du module. L'entrée de la mémoire tampon 61 est reliée au bus 55. La sortie de la mémoire tampon 61 est reliée à une première entrée du multiplieur 41 par une ligne 53 à une seconde entrée du multiplieur 41 par une ligne 530. La sortie du multiplieur 41 est reliée d'une part à l'entrée de la mémoire tampon 63 par une ligne 531 et d'autre part à une entrée de l'additionneur 43 par la ligne 56. La sortie de la mémoire tampon 63 est reliée à l'autre entrée de l'additionneur 43 par la ligne 57. La sortie de l'additionneur 43 est reliée aux entrées des mémoires tampon 66 et 67 respectivement par les lignes 534 et 533. Les sorties 52 des mémoires tampon 66 et 67 sont reliées au bus 55.

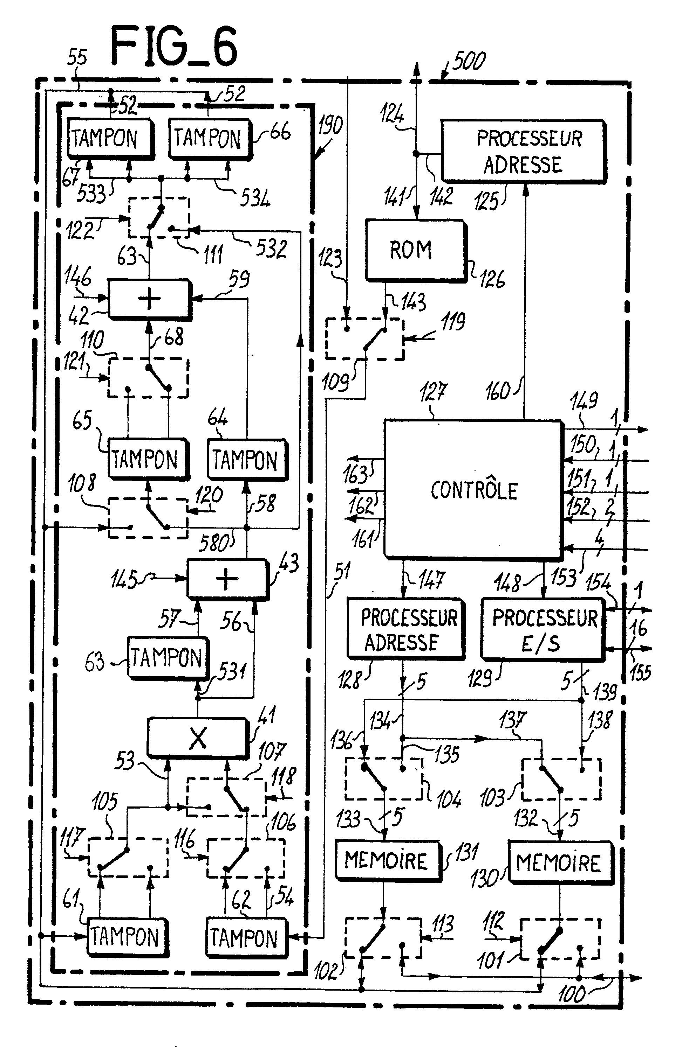

Sur la figure 6, on peut voir un exemple de réalisation particulièrement performant du processeur 500 de calcul de la TFD selon l'invention. Le processeur 500 permet de choisir le calcul de la TFD, de la pondération suivie du calcul de TFD ou du calcul des modules. Il sera évident pour l'homme de l'art d'après l'enseignement contenu dans ce brevet de réaliser un processeur exécutant d'abord les corrélations, la TFD suivie d'un calcul de pondération. Le processeur 500 comporte le dispositif 190 des figures 3, 4 et 5, deux mémoires vives 130 et 131 (RAM en terminologie anglo-saxonne) un processeur des entrée-sortie 129, un processeur 128 de calcul d'adresse des mémoires 130 et 131, une mémoire des coefficients 126 associée à un processeur d'adresse 125 ainsi qu'un circuit 127 logique de contrôle du processeur 500. La présence des mémoires internes au processeur 500 ainsi que de leur processeur d'adresse et d'entrées-sorties permet d'augmenter la vitesse de traitement du processeur. Les chemins de donnée désirés dans le processeur 500 sont choisis grâce à des commutateurs 101, 102, 103, 104, 105, 106, 107, 108, 109, 110 et 111 commandés respectivement par les signaux 112, 113, 114, 115, 116, 117, 118, 119, 120, 121 et 122. Les signaux de commande des commutateurs sont émis par l'unité de contrôle 127 par la ligne 161.

Le dispositif 190, le commutateur 105 et 106 permettent de choisir les sorties des mémoires tampon 61 et 62. La sortie du commutateur 106 est connectée au commutateur 107 permettant de choisir à l'une des entrées du multiplieur 41 entre la sortie de la mémoire 62 et celle de la mémoire 61. Le commutateur 108 permet de choisir de connecter l'entrée de la mémoire tampon 65 au bus 55 ou à la sortie de l'additionneur 43. Le commutateur 110 permet de choisir une des deux sorties de la mémoire tampon 65. Le commutateur 111 permet de choisir d'envoyer les informations présentes à la sortie de l'additionneur 42 ou les informations présentes à la sortie de l'additionneur 43 aux mémoires tampons 66 et 67.

Dans l'exemple de réalisation de la figure 6 les mémoires 130 et 131 ont une taille réduite. Ainsi un bus de donnée 100 les relie à une mémoire externe non représentée. Dans cette dernière mémoire est stockée la suite dont on veut calculer la TFD. Les commutateurs 101 et 102 permettent de choisir entre l'écriture des données à partir du bus 100 ou la lecture des données en mémoire et l'envoie sur le bus 55 des mémoires respectivement 130 et 131. Le commutateur 101 reçoit un signal de commande 112 et le commutateur 102 un signal de commande 113. Les mémoires 130 et 131 comportent respectivement un bus d'adresse 132 et 133. Dans l'exemple de réalisation illustré par la figure 6, la Demanderesse a utilisé des bus d'adresse de cinq bits correspondant à la capacité des mémoires 130 et 131. Les bus d'adresses 132 et 133 sont reliés au processeur des entrées-sorties 129 en mode écriture ou au processeur d'adresse 128 en mode lecture. La sélection est opérée pour les mémoires 130 et 131 respectivement par le commutateur 103 et 104 qui reçoivent respectivement les signaux de commande 114 et 115. Le processeur d'entrée-sortie 129 est relié au commutateur par tout d'abord une ligne 139 reliée elle-même au commutateur 103 par une ligne 138 et au commutateur 104 par une ligne 136. Le processeur d'adresse 128 est relié aux commutateurs 103 et 104 respectivement par les lignes 137 et 135 reliées à la ligne 134. Le processeur entrées-sorties 129 est relié par la ligne 155 à la mémoire externe non représentée, sur laquelle il envoie par exemple sur seize bits l'adresse à lire dans ladite mémoire externe.

En mode lecture les mémoires 130 et 131 sont reliées au bus de donnée 55 afin de fournir au dispositif 190 les données à traiter.

La mémoire 126 contient les coefficients W de la TFD. Elle est connectée au bus 51 par l'intermédiaire de la ligne 143 et du commutateur 109. Le processeur d'adresse 125 de la mémoire 126 est relié à son bus d'adresse 141 par une ligne 142. La mémoire 126 est par exemple une mémoire morte (ROM en terminologie anglo-saxonne) ou mémoire morte programmable (PROM en terminologie anglo-saxonne).

Avantageusement le dispositif selon l'invention permet le changement des coefficients W de la TFD. Les jeux supplémentaires des coefficients sont stockés dans une mémoire externe du processeur 500. Le processeur d'adresse 125 permet l'adressage de cette mémoire par la ligne 142 et le bus 124. Les données de cette mémoire sont présentes sur le bus 123 qui est connecté au bus 51 par l'intermédiaire du commutateur 109. Le processeur d'entrée-sortie 129 est connecté à une horloge d'entrée-sortie externe. Toutes les horloges internes au processeur 500 sont synchronisées par le dispositif de contrôle 127 au moyen de la ligne 162. Suivant le type de calcul à exécuter les additionneurs 43 et 42 doivent exécuter des additions ou des soustractions. La commutation entre ces deux fonctions est effectuée par les signaux 145 et 146 reçus à partir du dispositif de contrôle 127 par l'intermédiaire de la ligne 163. Le nombre N des termes de la suite f dont on veut calculer la TFD est donné par la ligne 153. L'ordre d'effectuer une pondération est donné au dispositif de contrôle 127 par la ligne 152 par exemple sur un bit. L'ordre de calculer le module est donné au dispositif de contrôle 127 par la ligne 151 par exemple sur un bit. L'ordre de commencement de calcul est donné au dispositif de contrôle 127 par la ligne 150 par exemple sur une ligne transmettant un bit. La fin des calculs est signalé par un dispositif de contrôle 127 par la ligne 149 par exemple sur un bit. Pour ne pas encombrer la figure les lignes 161, 162 et 163 ne sont pas représentées.

La mémoire 126 comporte les coefficients w de la TFD qui sont par exemple les racines $N^{\text{ièmes}}$ de l'unité. En fait pour tous les calculs c'est le coefficient appartenant à l'intervalle $[0,\pi]$ sont nécessaires. Dans une variante de réalisation la mémoire 126 ne contient que les coefficients appartenant à l'intervalle $[0,\pi/4]$ ; les autres coefficients étant déduits par des régles classiques de trigonométries. La mémoire 126 contient le coefficient de la TFD de taille maximale que l'on veut calculer, par exemple 4096 ; le coefficient d'une TFD de taille inférieure constitue un sous-ensemble des coefficients de la TFD de la taille maximale.

Le processeur d'adresse 125 adresse les coefficients d'une TFD de taille inférieure en utilisant les bits de poids fort (MSB en terminologie anglo-saxonne) de l'adresse des coefficients de la TFD de taille maximale. Le nombre de bits d'adresses est fonction croissante du nombre de points de la TFD.

Dans un exemple de réalisation le multiplieur 41 est un multiplieur opérant sur des données en format fixe par exemple de seize bits comportant huit étages.

Dans le second exemple de réalisation permettant d'assurer la multiplication de nombre en format à virgules flottantes le multiplieur comporte un circuit de traitement de l'exposant fournissant l'explosant du résultat.

Dans le troisième exemple de réalisation le multiplieur 41 comporte un dispositif permettant de donner le poids respectif aux bits au cas ou le format n'est pas normalisé.

Les additionneurs 43 et 42 traitent des opérants en format à virgules flottantes avec six bits d'exposant et dix huit bits de mantisse. Avantageusement les additionneurs comportent trois étages pipe-line comportant un étage de dénormalisation, un étage additionneur et un étage de rénormalisation.

Comme il est montré par la formule 1 le calcul par le dispositif selon l'invention d'une TFD consiste à subdiviser en groupes indépendants de taille réduite en exécutant toujours les papillons TFD des figures 1 ou 2. Le nombre de ces papillons d'un groupe est donc fixé par la taille du tableau de donnée d'entrée. Par exemple pour une TFD de trente-deux termes on effectue deux étapes : une première avec quatre groupes de huit termes et une seconde avec huit groupes de quatre termes. Ainsi on effectue successivement le transfert un par un des quatre tableaux de donnée des huit termes puis des huit tableaux de donnée de quatre points dans les mémoires 130 et 131. Une fois le calcul exécuté les tableaux résultant sont transférés dans la mémoire externe non représentée aux mêmes adresses que les tableaux d'entrée. On dit alors que le calcul s'effectue "en place". La mémoire interne de calcul est partagée en deux blocs 130 et 131 assurant alternativement le rôle des mémoires d'entrée-sortie et celui de la mémoire de calcul. Avantageusement le bus 100 a une capacité permettant l'accès des données complexes. Par exemple de l'opération élémentaire nécessitant quatre multiplications réelles et six additions réelles la mémoire par exemple 130 va fournir un dispositif 190 de données complexes et recevoir également deux données complexes les coefficients sont issus par exemple de la mémoire 126. Les tableaux suivants donnent les décompositions permettant de calculer les TFD comprises entre 8 termes et 32768 termes.

TABLEAU II

| N | Groupement | Nombre d'étapes |
|---|---|---|
| 8 | 8 | 1 |
| 16 | 16 | 1 |
| 32 | 32 | 1 |
| 64 | 8 x 8 | 2 |
| 128 | 8 x 16 | 2 |
| 256 | 16 x 16 | 2 |
| 512 | 16 x 32 | 2 |
| 1024 | 32 x 32 | 2 |
| 2048 | 8 x 16 x 16 | 3 |
| 4096 | 16 x 16 x 16 | 3 |
| 8192 | 16 x 16 x 32 | 3 |
| 16384 | 16 x 32 x 32 | 3 |
| 32768 | 32 x 32 x 32 | 3 |

La mémoire par exemple 130 est donc stockée soit :
- quatre tableaux de huit termes ;
- deux tableaux de seize termes ;
- un tableau de trente-deux termes.

Dans le cas général la mémoire externe non représentée contient R tableau de N termes. A la fin d'un calcul d'une TFD de N termes le processeur 129 passe au tableau suivant.

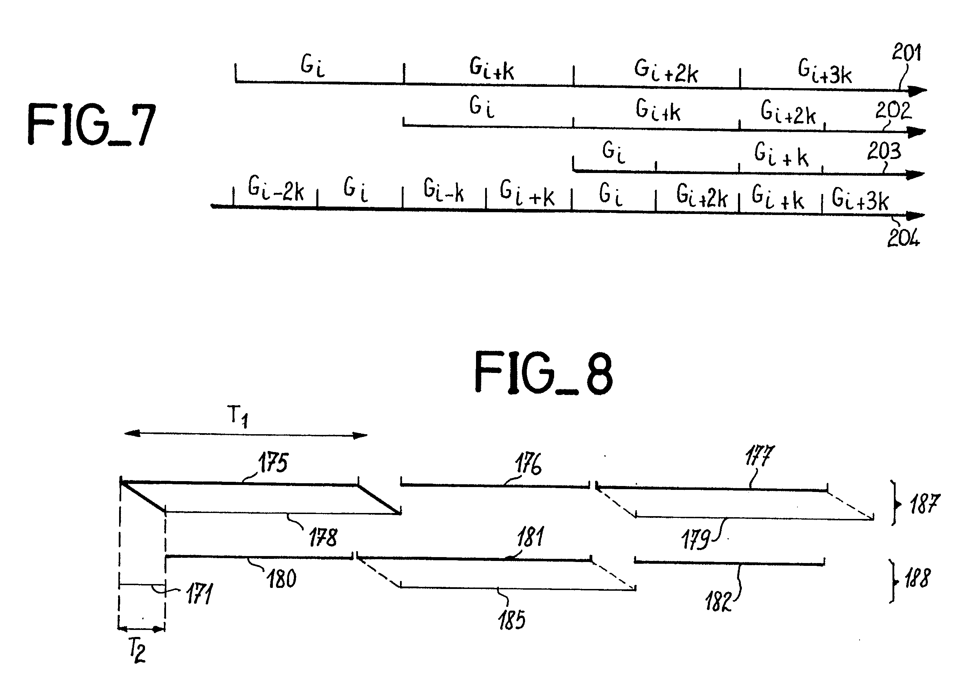

La figure 7 illustre les séquences d'adresse nécessaires aux diverses étapes du traitement TFD par le processeur 500. On a vu dans le tableau II qu'une TFD de N termes peut se décomposer par exemple en trois étapes comportant des groupes de N1, N2, N3 termes tels que $N = N_1 \times N_2 \times N_3$. Dans un exemple de réalisation une séquence d'adresse $G_l$ comportait la juxtaposition de trois nombres C1, C2 et C3 de longueur respectivement $\text{Log}_2 N_1$, $\text{Log}_2 N_2$, $\text{Log}_2 N_3$. Le processeur 129 fournit à la mémoire externe l'adresse des données d'entrée du groupe à exécuter. Pour les calculs du groupe de taille $N_1$ on fait varier C1, C2 et C3 restant constant. Pour calculer le groupe de taille $N_2$ on fait varier C2, C1 et C3 restant constant. Pour calculer le groupe de taille $N_3$ on fait varier C3, C1 et C2 restant constant.

Un exemple d'adresse fourni par un processeur 129 à la mémoire externe de taille $N_1$ est donné par le tableau III.

## TABLEAU III

| $C_1$ | | | $C_2$ | | | $C_3$ | | |
|---|---|---|---|---|---|---|---|---|
| $2^8$ | $2^7$ | $2^6$ | $2^5$ | $2^4$ | $2^3$ | $2^2$ | $2^1$ | $2^0$ |
| 256 | 128 | 64 | 32 | 16 | 8 | 4 | 2 | 1 |
| 0 | 0 | 0 | 0 | 1 | 1 | 0 | 1 | 0 |
| 0 | 0 | 1 | 0 | 1 | 1 | 0 | 1 | 0 |
| 0 | 1 | 0 | 0 | 1 | 1 | 0 | 1 | 0 |
| 0 | 1 | 1 | 0 | 1 | 1 | 0 | 1 | 0 |
| 1 | 0 | 0 | 0 | 1 | 1 | 0 | 1 | 0 |
| 1 | 0 | 1 | 0 | 1 | 1 | 0 | 1 | 0 |
| 1 | 1 | 0 | 0 | 1 | 1 | 0 | 1 | 0 |
| 1 | 1 | 1 | 0 | 1 | 1 | 0 | 1 | 0 |

Le calcul s'exécutant "en place" le processeur 129 fournit donc les adresses de sortie, ces adresses sont toutefois décalées dans le temps par rapport aux adresses d'entrée.

Dans l'exemple de réalisation représenté sur la figure 6 les coefficients de pondération sont contenus dans une mémoire externe au processeur 500. Le processeur d'adresse 125 calcule les adresses de ces coefficients et transmet par la ligne 142 au bus 124. Les coefficients obtenus sont envoyés de la mémoire externe non représentée par le bus de donnée 123 au bus 51. Etant donné que chaque terme dont on veut calculer la TFD doit être multiplié par un coefficient de même indice dans un exemple de réalisation les calculs des coefficients sont effectués par un compteur binaire. Les coefficients sont présents sur le bus 123 de façon séquentielle.

Dans un autre exemple de réalisation les coefficients de la pondération sont symétriques par rapport aux termes d'indice N/2. Dans ce cas il est possible que la mémoire 126 ne contient donc N/2 premier coefficient de la loi de pondération. Dans ce cas un dispositif transformant les bits d'adresse à partir du coefficient de rang N/2 est adjoint sur le bus d'adresse 141 de la mémoire 126.

Si la mémoire 126 ne contient que les coefficients de l'intervalle $[0,\pi/4]$ un décodeur non représenté sur la figure 6 est inséré avant la mémoire 126, ce décodeur assure l'adressage de la mémoire 126 ainsi que l'adressage du dispositif 190 permettant le changement de signe conforme aux formules trigonométriques permettant de passer de l'intervalle $[0,\pi/4]$ à l'intervalle $[0,\pi]$.

Sur la figure 7, on peut voir la variation dans le temps des séquences d'adresse. La courbe 201 représente les variations dans le temps des séquences d'adresse $G_i$ de transfert entre la mémoire externe et la mémoire interne. La courbe 202 représente l'évolution dans le temps des séquences d'adresse du groupe dont on exécute les traitements. La courbe 203 représente l'évolution dans le temps des séquences d'adresse $G_i$ des transferts mémoire interne-mémoire externe. La courbe 204 représente les séquences d'adresse que doit calculer le processeur 129 de la figure 6. Ceci donne dans l'exemple ou on part de $G_i$ et où k = 1 la séquence $G_i$, $G_{i+2}$, $G_{i+1}$, $G_{i+3}$, $G_{i+2}$, $G_{i+4}$, etc .... k est égal au nombre des termes de la suite partielle par le nombre de termes du groupe de l'étape en cours. Ainsi, on procède d'abord au transfert des données correspondant aux adresses de la séquence $G_i$ vers l'une des mémoires internes 130 ou 131 (ligne 201). Puis dès la fin de ce transfert, on procède au traitement de ces données (ligne 202). A la fin du traitement, les résultats pour la séquence $G_i$ sont transférés de la mémoire interne 130 ou 131 vers la mémoire externe (ligne 203). Pendant le traitement des données de la séquence $G_i$, on a procédé au transfert des données correspondant aux adresses de la séquence $G_{i+k}$ dans l'autre mémoire interne 131 ou 130, et ainsi de suite. Le processeur d'entrée-sortie 129 doit donc calculer les séquences d'adresses successives de la ligne 204 pour commander les transferts dans les deux sens entre mémoires internes et mémoires externes. On voit qu'en fait les transferts mémoire externe vers mémoire interne ne s'effectuent que pendant la seconde moitié des intervalles représentés sur la ligne 201.

Sur la figure 8, on peut voir l'évolution dans le temps des fonctions exécutées par les mémoires 130 et 131. Les fonctions exécutées par la mémoire 130 portent la référence 187 elles sont exécutées par la mémoire 131 de la référence 188. La longueur T1 correspond au temps de calcul, la longueur T2 correspond au retard pipe-line du calculateur. Une première fonction lecture d'une mémoire 130 porte sur la figure la référence 175 tandis que l'écriture porte la référence 178. Simultanément la mémoire 131 termine l'écriture en 171 et commence la gestion des entrées-sorties en 180. Au cycle suivant la mémoire 130 assure les échanges avec la mémoire externe en 176 i.e les entrées et sorties. Simultanément en 181 la mémoire 131 assure la lecture et en 185 l'écriture. Au cycle suivant les rôles sont rééchangés et en 177 la mémoire 130 assure la lecture et en 179 l'écriture tandis que la mémoire 131 assure les entrées et sorties en 182. La suite des cycles continuant de façon analogue n'est pas représentée sur la figure.

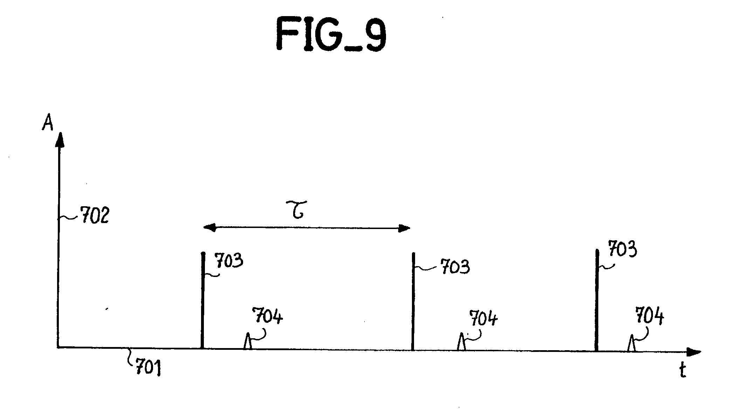

La TFD est un outil mathématique permettant l'analyse des spectres. Sur la figure 9 on peut voir un spectre radar comportant des impulsions émises 703 et les échos reçus 704. La droite 701 représente le temps t, la droite 702 l'amplitude du signal. Le spectre est périodique de période $\tau$. En radar il est intéressant de faire par exemple des corrélations entre une partie du spectre et la partie du spectre correspondant des périodes suivantes. Par exemple on calcule la corrélation de l'amplitude du signal A à l'instant t, $A(t_0)$, avec l'amplitude $A(t_0 + n\tau)$ où n est un entier. Une telle analyse spectrale nécessite le stockage des informations sur plusieurs périodes avant traitement. Avantageusement le signal radar numérisé est stocké dans une mémoire vive (RAM). Pour le traitement d'un signal comportant beaucoup d'informations la capacité de stockage des mémoires internes 130 et 131 au processeur 500 peut s'avérer insuffisant. On associe au processeur 500 des mémoires vives (RAM) externes.

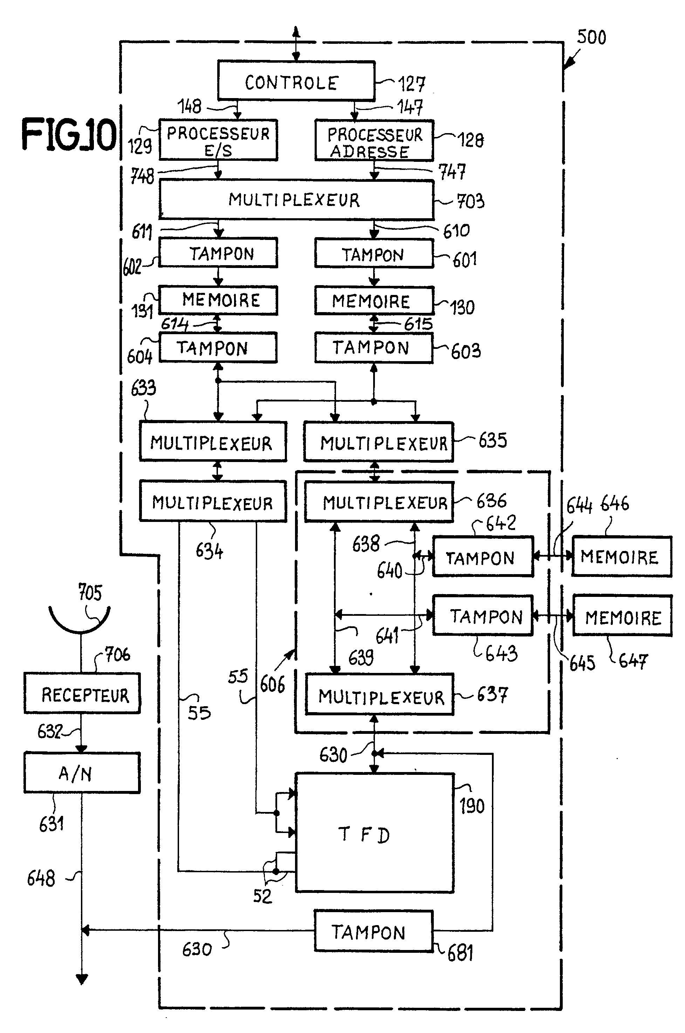

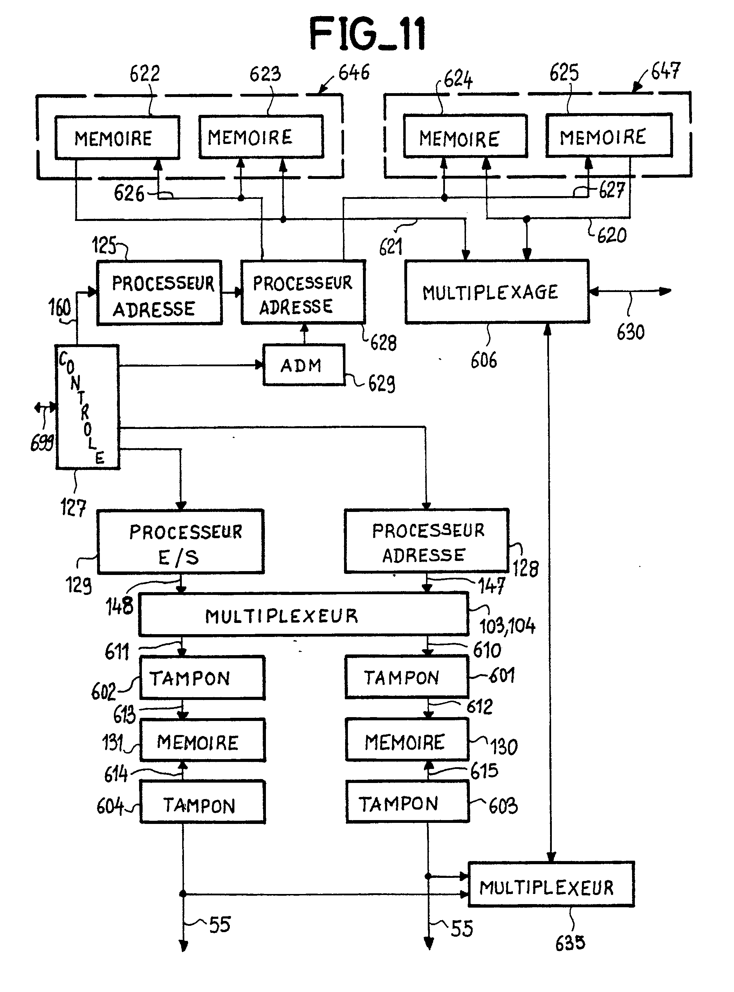

Avantageusement, le processeur 500 assure la gestion des mémoires extérieures. Des exemples de réalisation d'un circuit 500 assurant la gestion des mémoires externes sont illustrés par les figures 10 et 11. Dans ces exemples de réalisation on utilise les bus des entrées/sorties du circuit 500 pour l'échange de données des mémoires externes ceci sans augmenter le temps total de calcul.

Sur la figure 10, on peut voir un exemple de réalisation du dispositif selon l'invention assurant les transferts de données entre les mémoires externes 646, 647, les mémoires internes 130, 131 et l'acquisition des données. Pour la clarté de la figure des bus de commande n'ont pas été représentés. Le circuit 127 de contrôle est relié au processeur d'entrées/sorties 129 et au processeur d'adresses 128 par les bus de commande respectivement 148 et 147. Le processeur d'entrées/sorties 129 est relié à une première entrée d'un multiplexeur 703 par un bus d'adresses 748. Le processeur d'adresses 128 est relié à une seconde entrée du multiplexeur 703. Une première sortie du multiplexeur 703 est reliée à la mémoire 131 par l'intermédiaire d'un bus d'adresse 611. Avantageusement le bus 611 comporte une mémoire tampon 602 améliorant la synchronisation.

Une seconde sortie du multiplexeur 703 est reliée à la mémoire 130 par l'intermédiaire du bus 610. Avantageusement le bus 610 comporte une mémoire tampon 601 améliorant la synchronisation.

La mémoire 130 est reliée à des premières entrées des multiplexeurs 635 et 633 par l'intermédiaire d'un bus de données 615. Avantageusement le bus de données 615 comporte une mémoire tampon 603 améliorant la synchronisation. La mémoire 131 est reliée à des secondes entrées des multiplexeurs 635 et 633 par l'intermédiaire d'un bus de données 614.

Avantageusement, le bus de données 614 comporte une mémoire tampon 604 améliorant la synchronisation. Le multiplexeur 633 est relié à un multiplexeur 634. Le multiplexeur 634 est relié par des bus 55 au circuit de calcul de la TFD 190. Le multiplexeur 635 est relié à un multiplexeur 636 d'un circuit de multiplexage 606. En plus du multiplexeur 636, le circuit de multiplexage 606 comporte un multiplexeur 637 et deux mémoires tampon 642 et 643. Les mémoires tampon 642 et 643 sont reliées respectivement à des mémoires extérieures 646 et 647 par les bus de données 644 et 645. Le multiplexeur 637 est relié au circuit de calcul de la TFD 190 par un bus de données 630. Les multiplexeurs 636 et 637 sont reliés par deux bus de données 638 et 639. La mémoire tampon 642 est reliée au bus 638 par un bus de données 640. La mémoire tampon 643 est reliée au bus 639 par un bus de données 641.

Le bus de données 630 est relié à un bus de données 648 extérieur au dispositif selon l'invention. Avantageusement, le bus de données 630 comporte une mémoire tampon 681 améliorant la synchronisation. Le bus 648 fournit au circuit 500 les données à traiter et transmet les résultats du calcul. Par exemple le bus 648 est relié à un dispositif d'acquisition de données connecté à un convertisseur analogique-numérique 631. Le dispositif d'acquisition de données est par exemple une antenne de radar 705 associée à un récepteur 706.

Le multiplexeur 703 est susceptible de connecter alternativement le bus 610 au bus 748 et le bus 611 au bus 747 ou le bus 610 au bus 747 et le bus 611 au bus 748. Ainsi les mémoires 130 et 131 jouent alternativement le rôle de mémoire de calcul ou de mémoire d'entrées/sorties. Les multiplexeurs 633 et 634 assurent les échanges bidirectionnels de données entre la mémoire de calcul et le circuit de calcul de la TFD 190.

Simultanément, les multiplexeurs 635 et 636 assurent les échanges bidirectionnels de données entre la

EP 0 171 305 B1

mémoire d'entrées/sorties et l'une des mémoires extérieures 646 ou 647. Les mémoires tampon 642 ou 643 améliorant la synchronisation d'échange de données. L'autre mémoire externe est chargée par l'intermédiaire d'une mémoire tampon 642 ou 643, d'un premier bus 640 ou 641 d'un second bus 638 ou 639, du multiplexeur 637 du bus 630, de la mémoire tampon 681 et du bus 648.

Dans une variante de réalisation les mémoires tampon 61 à 67 des figures 3 à 6 ont les capacités de stockage nécessaires à un stockage simultané des parties réelle et imaginaire d'un nombre complexe. Le chargement s'opère en un cycle d'horloge, par contre les calculs durent quatre cycles d'horloge. Pendant trois cycles l'horloge de bus 630 est libre. Avantageusement, les échanges de données entre le bus 648 et les mémoires externes 646 ou 647 s'effectuent pendant les cycles de calcul du processeur 190 laissant libre le bus 630.

Ainsi le circuit de multiplexage 606 permet d'utiliser le même bus pour l'échange de données entre mémoires internes 130, 131 et mémoires externes 646, 647 et entre lesdites mémoires externes et le dispositif d'acquisition de données. Avantageusement, la mémoire externe est partagée en deux parties, mémoire 646 et mémoire 647, servant alternativement de mémoire d'entrée/sortie interne ou de mémoire d'entrée/sortie externe.

Sur la figure 11, on peut voir la gestion des mémoires du dispositif selon l'invention.

Les mémoires externes 646 et 647 sont partagées en mémoires de coefficients respectivement 622 et 625 et mémoires de données 623 et 624.

Les mémoires de coefficients 622 et 625 contiennent toutes les deux les mêmes coefficients de la TFD. Les mémoires de données 623 et 624 sont les mémoires vives (RAM).

Dans une première variante de réalisation du dispositif selon l'invention les mémoires de coefficients 622 et 625 sont des mémoires mortes (ROM) ou mémoires mortes reprogrammables (EPROM, EEPROM).

Dans une seconde variante de réalisation du dispositif selon l'invention les mémoires de coefficients 622 et 625 sont des mémoires vives (RAM) chargées à partir d'une mémoire de masse (non représentée). Le circuit de contrôle 127 reçoit les instructions et les impulsions de synchronisation par un bus 699. Le circuit de contrôle 127 gère les mémoires internes 130 et 131 de façon analogue à celle illustrée sur la figure 10. Le circuit de contrôle 127 est relié par un bus de commande 160 à un processeur d'adresses 125 de la mémoire de coefficients de la TFD. D'autre part le circuit de contrôle 127 est relié à un processeur d'accès direct mémoire 629 (DMA en terminologie anglo-saxonne). Le processeur d'adresses 125 de la mémoire de coefficients d'une part et d'autre part le processeur d'accès direct mémoire 629 sont reliés par des bus d'adresse à un processeur d'adresse 628 des mémoires externes. Le processeur d'adresses 628 des mémoires externes est connecté aux mémoires externes par un premier bus 626 à la mémoire 646 et par un second bus 627 à la mémoire 647. Les processeurs 125, 628 et 629 comportent des compteurs binaires et/ou des compteurs "bit reveres". Les processeurs 125 et 629 gèrent les adresses des données stockées dans des mémoires internes 646 et 647. Le processeur d'adresses 628 met en forme lesdites adresses. Avantageusement, les adresses de la mémoire de coefficients 622 ou 625 et de la mémoire de données 623 ou 624 sont transmises en un seul mot. Par exemple, l'adresse de la mémoire de coefficients 622 ou 625 est constituée par les bits de poids fort (MSB) du mot d'adresse. L'adresse de la mémoire de données 623 ou 624 est constituée par les bits de poid faible (LSB) du mot d'adresse.

Dans un exemple de réalisation du dispositif selon l'invention, certains bits sont communs aux deux adresses. Par exemple pour le calcul d'une TFD sur 1024 points, on utilise des mots d'adresses de mémoire externe de 18 bits. Les 11 bits de poids fort constituent l'adresse de la mémoire de coefficients. Les 11 bits de poids faible constituent l'adresse de la mémoire de données. le circuit de multiplexage 606 permet de lire les données stockées dans les mémoires externes 646 et 647 et d'écrire les données dans les mémoires des données 623 et 624 desdites mémoires externes.

Dans un premier temps le circuit de multiplexage transmet le coefficient de la TFD stocké dans la mémoire 622 au multiplieur 41 de la figure 6 par le bus 630.

Simultanément la mémoire de données 624 effectue un échange d'informations avec la mémoire interne d'entrée/sortie, par exemple la mémoire 131. La mémoire de calcul 130 fournit des données ou reçoit les résultats de calcul du circuit de calcul de la TFD 190 par l'intermédiaire du bus 55.

Dans un second temps le circuit de multiplexage 606 permet les échanges entre la mémoire de données 623 et le bus externe 648 de la figure 10 par l'intermédiaire du bus 630.

Simultanément se poursuivent les échanges de données entre la mémoire 131 et la mémoire 625. Ces échanges consistent en une transmission de résultat de calcul du papillon élémentaire précédent suivie du chargement de données nécessaire au papillon élémentaire suivant.

De façon analogue les mémoires de données, par exemple 625 transmettent tout d'abord les résultats du calcul de la TFD précédente puis chargent les données du calcul de la TFD suivante.

A la fin du calcul d'un papillon élémentaire on inverse le rôle des mémoires internes 130 et 131. Par

10

exemple, la mémoire 131 qui joue le rôle de la mémoire d'entrée/sortie comporte les données nécessaires au calcul du papillon élémentaire suivant. La mémoire 131 devient la mémoire de calcul. Par contre, la mémoire 130 comporte stockés les résultats de calcul du papillon précédent. Elle devient mémoire d'entrées/sorties.

De façon analogue à la fin du calcul d'une TFD on inverse les rôles des mémoires 646 et 647. Avantageusement, la même mémoire externe, par exemple 646, sert pour fournir le coefficient de la TFD au multiplieur 41 de la figure 10 et pour effectuer les échanges externes. Simultanément, la mémoire de données par exemple 624 de l'autre mémoire externe 647, effectue les échanges de données avec la mémoire interne d'entrées/sorties par exemple 130. Ce groupement assure une meilleure utilisation des bus 620 et 621. En effet, les échanges avec la mémoire interne 130 ou 131 sont plus importants que les échanges des mémoires externes avec le bus 648 de la figure 10.

Dans un exemple de réalisation du dispositif selon l'invention destiné au calcul de la TFD sur 1024 points des largeurs de bus de données sont :

| bus | nombre de bits |
|---|---|
| 55 | 2 x 48 |
| 620 | 50 |
| 621 | 50 |
| 630 | 48 |
| internes au processeur 190 | 24 |

Les bus 621 et 620 comportent deux bits de parité ou de correction d'erreurs. Dans un exemple de réalisation du dispositif selon l'invention destiné au calcul de la TFD sur 32768 points, les largeurs de bus de données sont :

| bus | nombre de bits |
|---|---|
| 55 | 2 x 48 |
| 620 | 50 |
| 621 | 50 |
| 630 | 48 |
| internes au processeur 190 | 24 |

Le dispositif selon l'invention s'applique principalement aux calculs de la transformée de Fourier discrète, et aux calculs des produits de convolution.

Dans une première variante de réalisation le dispositif selon l'invention est réalisé sous forme de circuits imprimés. Avantageusement le dispositif selon l'invention comporte des circuits intégrés. Avantageusement ces circuits intégrés sont en technologie en arséniure de gallium assurant une grande rapidité de traitement.

Dans une autre variante de réalisation les circuits sont réalisés sous une forme bipolaire rapide par exemple en logique non saturée (ECL en terminologie anglo-saxonne).

Dans une seconde variante du dispositif selon l'invention à réaliser sous forme de circuit intégré. Avantageusement ce circuit intégré est réalisé en technologie en arséniure de gallium.

Dans une variante de réalisation le circuit 500 de calcul de la TFD est réalisé sous forme d'un circuit intégré monolithique associé à un ou des circuits de mémoire permanente (ROM), 126 extérieur. Ceci permet d'augmenter la taille de la mémoire permanente 126 sans pour antant augmenter la surface du circuit de calcul de la TFD 500. De plus, il est ainsi possible de changer les coefficients, par exemple de pondération, sans modifier le circuit de calcul.

Avantageusement le dispositif de contrôle est réalisé sous la forme de réseau logique (PAL en terminologie anglo-saxonne).

EP 0 171 305 B1

## Revendications

1. Circuit de calcul de la transformée de Fourier discrète (TFD) mettant en oeuvre un algorithme de décimation en temps pour calculer la transformée de Fourier sur N points d'une suite de données ce calcul étant décomposé en une suite de calculs indépendants de transformée de Fourier sur des groupes de $N_i$ termes, tels que $N > N_i$ et $\pi_i N_i = N$, caractérisé en ce qu'il comprend :
   - un dispositif de calcul (190) de TFD fonctionnant selon une configuration en papillon ;
   - au moins une mémoire externe (646, 647 ; 622 à 625) contenant au moins lesdites suites de données sous forme de i tableaux à $N_i$ termes ;
   - deux mémoires vives internes (130, 131) fonctionnant alternativement en mémoire d'entrée-sortie et en mémoire de calcul pour ledit dispositif de calcul (190) ;
   - un processeur de calcul d'adresses (128) pour lesdites mémoires internes (130, 131) lorsqu'elles fonctionnent en mémoire de calcul de manière à transmettre audit dispositif de calcul (190) les données à traiter et à stocker les résultats reçus de celui-ci ;
   - un processeur d'entrée-sortie (129) pour gérer les transferts de données entre ladite mémoire externe et lesdites mémoires internes lorsqu'elles fonctionnent en mémoire d'entrée-sortie le processeur d'entrée-sortie (129) passant directement du tableau présent stocké dans la mémoire externe au tableau suivant à la fin de stockage d'un tableau ;
   - une mémoire (126) des coefficients pour le calcul de TFD par le dispositif de calcul (190) ;
   - un processeur de calcul d'adresses (125) pour la mémoire des coefficients (126) ; et
   - un circuit logique (127) de contrôle desdits processeurs de calcul d'adresses (128, 125), du processeur d'entrée-sortie (129) et du dispositif de calcul (190), de manière que ledit dispositif de calcul (190) calcule une TFD à partir des coefficients fournis par la mémoire de coefficients (126) et des données fournies par celle des mémoires internes (130, 131) qui fonctionne en mémoire de calcul, les résultats étant stockés dans cette dernière mémoire, pendant que les résultats antérieurs stockés dans l'autre mémoire interne sont extraits et les données correspondant au groupe suivant sont chargés dans cette autre mémoire à partir de la mémoire externe.

2. Circuit de calcul selon la revendication 1, caractérisé en ce que ladite mémoire des coefficients (126) est une mémoire morte.

3. Circuit de calcul selon la revendication 1, caractérisé en ce que ladite mémoire des coefficients (126) est une mémoire programmable (PROM, EPROM, EEPROM).

4. Circuit de calcul selon l'une des revendications 1 à 3, caractérisé en ce que différents jeux de coefficients sont stockés dans une mémoire externe de coefficients (622, 625) et en ce que ledit circuit de calcul comprend en outre des moyens (124, 123, 109) pour adresser ladite mémoire externe de coefficients par ledit processeur de calcul d'adresses (125) pour la mémoire de coefficients et pour transmettre les coefficients fournis par ladite mémoire externe de coefficients audit dispositif de calcul (190).

5. Circuit de calcul selon l'une quelconque des revendications 1 à 4, caractérisé en ce que ladite mémoire externe est subdivisée en deux parties (646, 647), en ce que les données sont générées par une source extérieure (705, 706, 631) et transmises sur un bus extérieur (648), et en ce que ledit circuit de calcul comporte en outre des moyens de multiplexage (606) pour utiliser les bus d'entrée-sorties (644, 645, 630) entre les mémoires externes et les mémoires internes pour le transfert de données entre ledit bus extérieur (648) et lesdites mémoires externes pendant que ces bus d'entrée-sortie ne sont pas utilisés pour les transferts entre mémoires externes (646, 647) et internes (130, 131), lesdites mémoires externes étant utilisées alternativement l'une pour les échanges de données et de résultats avec lesdites mémoires internes (130, 131), l'autre pour les échanges de données avec ledit bus extérieur et vice-versa.

6. Circuit de calcul selon la revendication 5, caractérisé en ce que chaque partie de mémoire externe (646, 647) comprend une portion de mémoire de données (623, 624) sous forme de mémoire vive et une portion de mémoire de coefficients (622, 625) sous forme de mémoire morte et en ce que ledit circuit de calcul comprend en outre un processeur d'accès direct mémoire (629) relié audit circuit logique (127) et un processeur d'adresses (628) des mémoires externes relié d'une part au processeur de calcul d'adresses (125) pour les mémoires de coefficients et au processeur d'accès direct mémoire

12

EP 0 171 305 B1

(629) et d'autre part aux mémoires externes (646, 647), pour mettre en forme les adresses envoyées auxdites mémoires externes.

7. Circuit de calcul selon la revendication 6, caractérisé en ce que les adresses des portions de mémoire externe de coefficients (622, 625) et les adresses de portions de mémoire externe de données (623, 624) sont transmises en un seul mot et en ce que les deux adresses ont certains bits en commun.

8. Circuit de calcul selon l'une quelconque des revendications 1 à 7, caractérisé en ce que ledit circuit est réalisé sous forme d'un ou plusieurs circuits intégrés.

9. Circuit de calcul selon la revendication 8, caractérisé en ce que lesdits circuits intégrés sont en arséniure de gallium.

**Claims**

1. A circuit for calculating a discrete Fourier transform (TFD) employing a time decimation algorithm in order to calculate the Fourier transform on N points of a series of data, said calculation being decomposed into a series of independent Fourier transform calculations on groups of $N_1$ terms such that $N > N_1$ and $\pi_i N_i = N$, characterized in that said circuit comprises:
   - a TFD calculation device (190) functioning in accordance with a butterfly configuration;
   - at least one external memory (646, 647; 622 through 625) containing at least the said series of data in the form of i tables of $N_i$ terms;
   - two internal RAMs (130 and 131) functioning alternatively as an input-output memory and as a calculation memory for the said calculation device (190);
   - an address calculation processor (128) for the said internal memories (130 and 131), when they are functioning as a calculation memory, in such a manner as to transmit the data to be processed to the said calculation device (190) and to store the results received from the latter;
   - a input-output processor (129) in order to control the transfers of the data between the said external memory and the said internal memories when they are functioning as input-output memories, the input-output processor (129) passing directly from the current table stored in the external memory to the following table at the end of storing of a table;
   - a memory (126) for the coefficients for the calculation of the TFD by the calculation device (190);
   - an address calculating processor (125) for the memory (126) for the coefficients; and
   - a logic circuit (127) for the control of the said address calculating processors (128 and 125), of the input-output processor (129) and of the calculation device (190) in such a manner that the said calculation device (190) calculates a TFD starting from coefficients supplied by the coefficient memory (126) and from data supplied by the one of the internal memories (130 and 131) which functions as a calculating memory, the results being stored in this last memory, while the preceding results stored in the other internal memory are being extracted and the data corresponding to the following group are transferred from the external memory into the said other memory.

2. The calculation circuit as claimed in claim 1, characterized in that the said coefficient memory (126) is a read-only memory.

3. The calculation circuit as claimed in claim 1, characterized in that the said coefficient memory (126) is a programmable memory (PROM, EPROM, EEPROM).

4. The calculation circuit as claimed in any one of the preceding claims 1 through 3, characterized in that different sets of coefficients are stored in an external coefficient memory (622 and 625) and in that the said calculating circuit furthermore comprises means (124, 123 and 109) in order to address the said external coefficient memory through the address calculating processor (125) for the coefficient memory and in order to transmit the coefficients supplied by the said external coefficient memory to the said calculation device (190).

5. The calculation circuit as claimed in any one of the preceding claims 1 through 4, characterized in that the said external memory is subdivided into two parts (646 and 647), in that the data are generated by an external source (705, 706 and 631) and are transmitted on an external bus (648), and in that the said

13

calculating circuit furthermore comprises multiplexing means (606) in order to use the input-output buses (644, 645 and 630) between the external memories and the internal memories for the transfer of the data between the said external bus (648) and the said external memories while said input-output buses are not being utilized for the transfer between external memories (646 and 647) and internal ones (130 and 131), the said external memories being utilized alternatively on the one hand for exchange of data and results with the said internal memories (130 and 131) and on the other hand for exchanges of data with the said external bus and vice-versa.

6. The calculation circuit as claimed in claim 5, characterized in that each part of the external memory (646 and 647) comprises a data memory portion (623 and 624) in the form of a RAM and a coefficient memory portion (622 and 625) in the form of a read-only memory and in that the said calculation circuit furthermore comprises a direct memory access processor (629) connected with the said logic circuit (127) and an address processor (628) for external memories connected on the one hand with the address calculating processor (125) for the coefficient memories and with the direct access memory processor (629) and on the other hand with the external memories (646 and 647) in order to prepare the addresses transferred to the said external memories.

7. The calculation circuit as claimed in claim 6, characterized in that the addresses of the external coefficient memory portion (622 and 625) and the addresses of the external data memory portions (623 and 624) are transmitted in a single word and in that the two addresses share certain bits in common.

8. The calculation circuit as claimed in any one of the preceding claims 1 through 7, characterized in that the said circuit is embodied in the form of one or more integrated circuits.

9. The calculation circuit as claimed in claim 8, characterized in that the said integrated circuits are gallium arsenide circuits.

**Patentansprüche**

1. Schaltung zum Berechnen der diskreten Fourier-Transformierten (TFD), die einen Zeit-Dezimationsalgorithmus verwendet, um die Fourier-Transformierte über N Punkte einer Datenfolge zu errechnen, wobei diese Berechnung in eine Folge von voneinander unabhängigen Vorgängen der Berechnung der Fourier-Transformierten über Gruppen von $N_i$ Termen zerfällt, so daß $N > N_i$ und $\pi_i N_i = N$, dadurch gekennzeichnet, daß sie umfaßt:
   - eine TFD-Rechenvorrichtung (190), die nach einer Schmetterling-Konfiguration arbeitet;
   - wenigstens einen externen Speicher (646, 647; 622 bis 625), der wenigstens die genannten Datenfolgen in Form von i Tabellen mit $N_i$-Termen enthält;
   - zwei interne Arbeitsspeicher (130, 131), die wechselweise als Eingangs-Ausgangs-Speicher und als Rechenspeicher für diese Rechenvorrichtung (190) arbeiten;
   - einen Prozessor (128) zum Berechen von Adressen für diese internen Speicher (130, 131), wenn sie als Rechenspeicher arbeiten, so daß dieser Rechenvorrichtung (190) die zu verarbeitenden Daten übermittelt und die aus dieser erhaltenen Ergebnisse gespeichert werden;
   - einen Eingangs-Ausgangs-Prozessor (129), um die Datenübertragungen zwischen diesem externen Speicher und diesen internen Speichern zu steuern, wenn sie als Eingangs-Ausgangs-Speicher arbeiten, wobei der Eingangs-Ausgangs-Prozessor (129) direkt von der vorliegenden, in dem externen Speicher gespeicherten Tabelle zu der darauffolgenden Tabelle am Ende des Speicherns einer Tabelle übergeht;
   - einen Speicher (126) für die Koeffizienten zur TFD-Berechnung durch die Rechenvorrichtung (190);
   - einen Prozessor (125) zum Berechnen von Adressen für den Koeffizienten-Speicher (126); und
   - eine Logikschaltung (127) zur Steuerung dieser Prozessoren für das Berechnen der Adressen (128, 125), des Eingangs-Ausgangs-Prozessors (129) und der Rechenvorrichtung (190), so daß diese Rechenvorrichtung (190) eine TFD ausgehend von den durch den Koeffizienten-Speicher (126) gelieferten Daten und den Daten, die durch denjenigen der internen Speicher (130, 131), der als Rechenspeicher arbeitet, geliefert werden, errechnet, wobei die Ergebnisse in diesem letzten Speicher gespeichert werden, während die früheren Ergebnisse, die in dem anderen internen Speicher gespeichert sind, entnommen werden und die der folgenden Gruppe entsprechenden Daten aus dem externen Speicher in diesen anderen Speicher geladen werden.

2. Rechenschaltung nach Anspruch 1, dadurch gekennzeichnet, daß der Koeffizienten-Speicher (126) ein Festwertspeicher ist.

3. Rechenschaltung nach Anspruch 1, dadurch gekennzeichnet, daß der Koeffizienten-Speicher (126) ein programmierbarer Speicher (PROM, EPROM, EEPROM) ist.

4. Rechenschaltung nach einem der Ansprüche 1 bis 3, dadurch gekennzeichnet, daß verschiedene Koeffizientensätze in einem externen Koeffizienten-Speicher (622, 625) gespeichert sind und daß die Rechenschaltung ferner Mittel (124, 123, 109) umfaßt, um diesen externen Koeffizienten-Speicher durch den Prozessor (125) zum Berechnen der Adressen für das Speichern der Koeffizienten zu adressieren, und um die durch diesen externen Koeffizienten-Speicher gelieferten Koeffizienten an diese Rechenvorrichtung (190) zu adressieren.

5. Rechenschaltung nach einem der Ansprüche 1 bis 4, dadurch gekennzeichnet, daß der externe Speicher in zwei Teile (646, 647) unterteilt ist, daß die Daten von einer externen Quelle (705, 706, 631) erzeugt und auf einer externen Busleitung (648) übermittelt werden und daß die Rechenschaltung ferner Mittel (606) zum Multiplexieren umfaßt, um die Eingangs-Ausgangs-Busleitungen (644, 645, 630) zwischen den externen Speichern und den internen Speichern für die Datenübertragung zwischen dieser externen Busleitung (648) und diesen externen Speichern zu verwenden, während diese Eingangs-Ausgangs-Busleitungen für die Übertragungen zwischen externen Speichern (646, 647) und internen Speichern (130, 131) nicht verwendet werden, wobei diese externen Speicher abwechselnd verwendet werden, der eine jeweils für den Austausch von Daten und Ergebnissen mit den internen Speichern (130, 131) und der andere jeweils für den Daten-Austausch mit der externen Busleitung, und umgekehrt.

6. Rechenschaltung nach Anspruch 5, dadurch gekennzeichnet, daß jeder Teil des externen Speichers (646, 647) einen Datenspeicherteil (623, 624) in Form eines Arbeitsspeichers sowie einen Koeffizienten-Speicherteil (622, 625) in Form eines Festwertspeichers umfaßt und daß die Rechenschaltung ferner einen Prozessor für direkten Speicher-Zugriff (629) umfaßt, der mit der Logikschaltung (127) und einem Adressen-Prozessor (628) der externen Speicher verbunden ist, der einerseits mit dem Prozessor (125) für das Berechnen der Adressen für die Koeffizienten-Speicher und mit dem Prozessor für direkten Speicher-Zugriff (629) sowie andererseits mit den externen Speichern (646, 647) verbunden ist, um die an diese externen Speicher gesendeten Adressen in Form zu bringen.

7. Rechenschaltung nach Anspruch 6, dadurch gekennzeichnet, daß die Adressen der externen Koeffizienten-Speicherteile (622, 625) und die Adressen der externen Daten-Speicherteile (623, 624) in einem einzigen Wort übermittelt werden und daß die beiden Adressen bestimmte Bits gemeinsam aufweisen.

8. Rechenschaltung nach einem der Ansprüche 1 bis 7, dadurch gekennzeichnet, daß die Schaltung in Form einer integrierten Schaltung oder mehrerer integrierter Schaltungen ausgebildet ist.

9. Rechenschaltung nach Anspruch 8, dadurch gekennzeichnet, daß diese integrierten Schaltungen aus Galliumarsenid sind.

# FIG_1

# FIG_2

# FIG_3

# FIG_4

# FIG_5

FIG_6

# FIG_7

$G_i$  |  $G_{i+k}$  |  $G_{i+2k}$  |  $G_{i+3k}$  — 201

$G_i$  |  $G_{i+k}$  |  $G_{i+2k}$  — 202

$G_i$  |  $G_{i+k}$  — 203

$G_{i-2k}$ | $G_i$ | $G_{i-k}$ | $G_{i+k}$ | $G_i$ | $G_{i+2k}$ | $G_{i+k}$ | $G_{i+3k}$ — 204

# FIG_8

$T_1$

175  176  177  } 187

178  181  179

171  180  185  182  } 188

$T_2$

EP 0 171 305 B1

# FIG_9

FIG.10

# FIG_11